(19) Europäisches Patentamt
European Patent Office
Office européen des brevets

(11) EP 2 172 294 A1

(12) EUROPEAN PATENT APPLICATION
published in accordance with Art. 153(4) EPC

(43) Date of publication:
07.04.2010 Bulletin 2010/14

(51) Int Cl.:
B23C 3/32 (2006.01)    B23C 5/00 (2006.01)
B23G 1/32 (2006.01)

(21) Application number: 07790274.0

(22) Date of filing: 20.07.2007

(86) International application number:
PCT/JP2007/000779

(87) International publication number:
WO 2009/013783 (29.01.2009 Gazette 2009/05)

(84) Designated Contracting States:
AT BE BG CH CY CZ DE DK EE ES FI FR GB GR
HU IE IS IT LI LT LU LV MC MT NL PL PT RO SE
SI SK TR
Designated Extension States:
AL BA HR MK RS

(71) Applicants:
• Sumitomo Metal Industries Limited
Osaka-shi, Osaka 541-0041 (JP)
• Kajita Machinery, LTD.
3-24, Nishikino-cho Nishi 3-cho
Sakai-ku
Sakai-shi
Osaka 590-0931 (JP)

(72) Inventors:
• KAJITA, Sotaro
Sakai-shi,
Osaka 590-0931 (JP)
• SAITO, Akira
Osaka-shi,
Osaka 541-0041 (JP)

(74) Representative: Zimmermann, Gerd Heinrich
Zimmermann & Partner
Isartorplatz 1
80331 München (DE)

(54) METHOD AND APPARATUS FOR FORMING SPIRAL GROOVE BY CUTTING

(57) A method is provided for forming a spiral groove in the outer circumferential face of a columnar or cylindrical work (WK) by cutting, in which a side cutter (19) provided with a blade body on the outer circumference is rotated around an axis thereof, in a state of the axis of the side cutter (19) having been tilted at a predetermined angle relative to an axis of the work (WK), and furthermore in a state of the blade body of the side cutter (19) having been disposed so as to cut the outer circumferential face of the work (WK) by an amount of a depth of the groove, and the side cutter (19) is moved in a direction (M1) parallel to the axis of the work (WK), and in synchronization with this, the work (WK) is rotated around the axis thereof in an arrow direction (M2). The shape of the blade body that is used is, for example, a trapezoid whose short side is the tip part.

FIG. 8

**Description**

TECHNICAL FIELD

The present invention relates to a method and apparatus for forming a spiral groove by cutting, and is used for forming, for example, a groove for a cooling fin provided on the outer circumferential face of a rotor for an eddy current type retarder, a tooth groove for a helical gear, or a thread groove for a screw, by cutting.

BACKGROUND ART

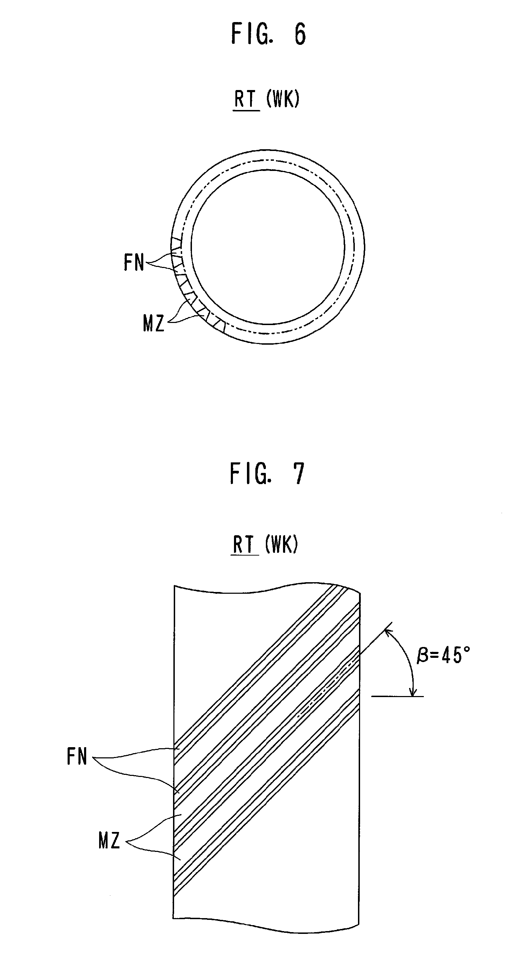

Conventionally, large vehicles such as buses and trucks have included, as braking apparatuses, an auxiliary brake in addition to the foot brake that is the main brake. A retarder (eddy current brake) has been used as such an auxiliary brake. A retarder is constituted by a fixing unit in which multiple magnets are included around a support ring, and a rotor composed of a rotation shaft and a cylinder part connected thereto (JP H11-113240A). Many inclined plate-shaped fins FN for cooling are provided on the outer circumferential face of a rotor RT (see FIGS. 6 to 8).

Conventionally, the following methods (1) to (3) have been used when manufacturing the rotor RT provided with the fins FN.

(1) Attaching the fins FN to the outer circumferential face of a cylindrical member by welding.
(2) Forming a spiral groove in the outer circumferential face of a cylindrical member by cutting with use of an end mill, whereby the remaining part is the fin FN.
(3) Forming a spiral groove in the outer circumferential face of a cylindrical member by cutting with use of a hob, whereby the remaining part is the fin FN.

However, each of the methods described above needs a lot of man-hours for manufacturing the rotor RT, and this is a cause for an increase in cost.

For example, in the above-described method by welding (1), approximately 30 minutes is required to attach one fin FN to a cylindrical member that is approximately 400 mm in diameter, and therefore attaching all of, for example, 80 fins FN would take approximately 40 hours. Also, this would take approximately 10 hours when using the method of cutting with an end mill (2), and approximately 5 hours when using the method of cutting with a hob (3).

Also, besides the fin-attached rotor described above, there are various other objects manufactured by forming a spiral groove in the outer circumferential face of a cylindrical member, and many of such objects are manufactured by the methods (1) to (3) described above, thus requiring a lot of man-hours.

DISCLOSURE OF THE INVENTION

The present invention has been achieved in view of the problems described above, and an object thereof is to provide a method and apparatus that, in the case of forming a spiral groove in the outer circumferential face of a columnar or cylindrical member to be cut, can form the spiral groove in a shorter time than in conventional technology.

A method according to an embodiment of the present invention is a method of forming a spiral groove in an outer circumferential face of a columnar or cylindrical member to be cut by cutting, the method including: rotating a side cutter provided with a blade body on an outer circumference around an axis thereof, in a state of the axis of the side cutter having been tilted at a predetermined angle relative to an axis of the member to be cut, and furthermore in a state of the blade body of the side cutter having been disposed so as to cut the outer circumferential face of the member to be cut by an amount of a depth of the groove; and moving the side cutter parallel to the axis of the member to be cut, as well as in synchronization therewith, rotating the member to be cut around the axis thereof. It is sufficient for the member to be cut and the side cutter to be moved and rotated relatively to each other.

Preferably, a shape of the blade body is identical to a cross-sectional shape of the groove at a contact position on a perpendicular line descending from the center of the side cutter to the axis of the member to be cut, and furthermore is a shape such that interference does not occur between a circumferential face of a formed groove and the blade body at a position separated from the contact position.

More preferably, the shape of the blade body is a trapezoid whose short side is a tip part, and a shape of the groove formed by the blade body is a trapezoid whose cross-sectional shape is identical to the shape of the blade body.

BRIEF DESCRIPTION OF THE DRAWINGS

FIG. 1 is a front view of a cutting apparatus according to the present invention.
FIG. 2 is a right side view of the cutting apparatus.
FIG. 3 is a plan view of the cutting apparatus.
FIG. 4 is a diagram showing an enlarged view of part of a side cutter.
FIG. 5 is a diagram showing an enlarged view of a blade body of the side cutter.
FIG. 6 is a front view showing an example of a rotor manufactured by the cutting apparatus.
FIG. 7 is a diagram showing an expansion of part of the surface of the rotor shown in FIG. 6.
FIG. 8 is a diagram showing a positional relationship between a work and the side cutter.

FIG. 9 is a block diagram showing an exemplary configuration of a control apparatus.

FIG. 10 is a diagram showing a relationship between the traveling distance of the surface of the work and the traveling distance of the side cutter.

FIG. 11 is a diagram for describing synchronization control by the control apparatus.

FIG. 12 is a diagram showing a relationship between the circumference of the outer circumferential face of the work and a virtual circle along a spiral groove.

FIG. 13 is a diagram showing a relationship between the shape of a groove viewed from the radial direction of the rotor and the cross-sectional shape of the groove at positions along the virtual circle.

FIG. 14 is a diagram showing a positional relationship between the trajectory of the blade body and a groove along the direction of the virtual circle.

FIG. 15 is a diagram showing an enlarged view of a relevant part of FIG. 14.

FIG. 16 is a diagram showing a positional relationship between the blade body and the groove at various positions.

FIG. 17 is a diagram showing examples of a blade having another shape.

BEST MODE FOR CARRYING OUT THE INVENTION

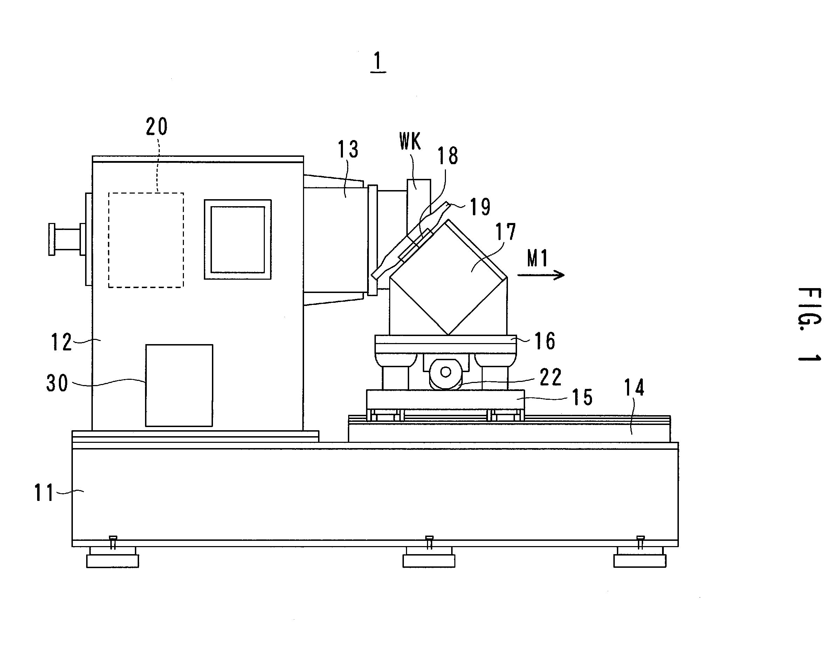

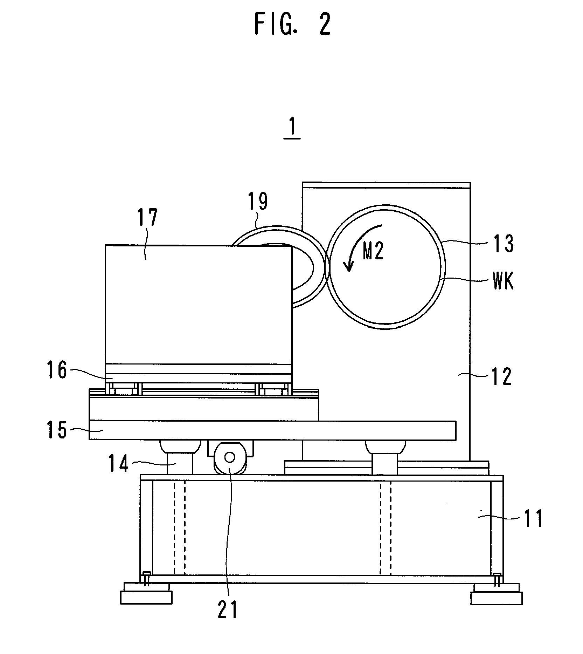

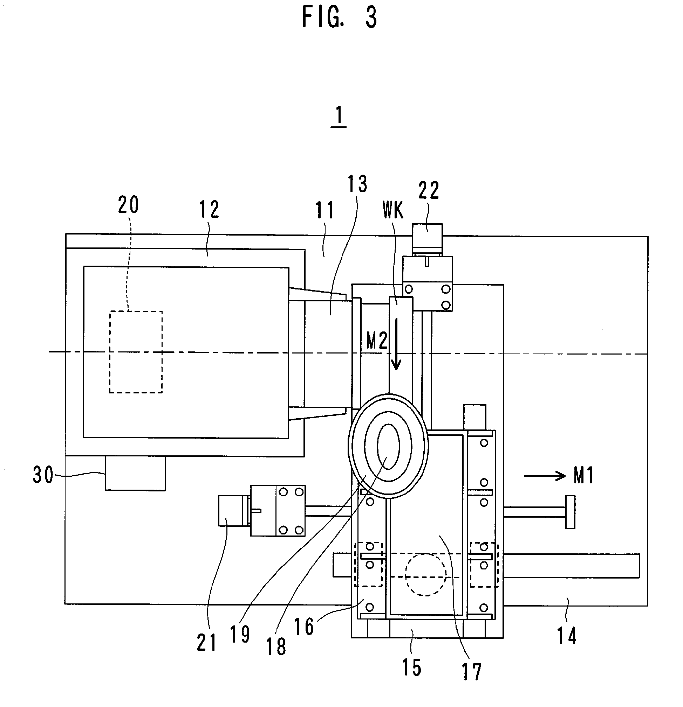

In FIGS. 1 to 3, a cutting apparatus 1 includes a bed 11, a θ shaft housing 12, a θ shaft 13, an X axis slide base 14, an X axis slide 15, a Z axis slide 16, a tool rest 17, a cutter shaft 18, a side cutter 19, a control apparatus 30, and the like. A work WK is attached to the θ shaft 13.

As shown in FIGS. 6 and 7, the work WK is a cylindrical object composed of carbon steel or another metal material. A rotor RT having many fins FN is manufactured by forming spiral (helical) grooves MZ in the outer circumferential face of the work WK by cutting. The tilt angle, that is to say, the torsion angle β of each groove MZ relative to an axis JW of the work WK is 45°. The cooling effect is large when the tilt angle of the fins FN is 45°.

As one example of the dimensions of the work WK and the rotor RT, the outer diameter is approximately 455 mm, the inner diameter is approximately 400 mm, and the width LWK is approximately 77 mm. The depth of each groove MZ is approximately 13.5 mm, the pitch of each groove MZ in the perpendicular direction is approximately 12 mm, and the number of grooves MZ, that is to say, the number of fins FN is 80. The work WK is attached concentrically to the θ shaft 13, and is rotationally driven in the direction of an arrow M2 around the horizontal axis.

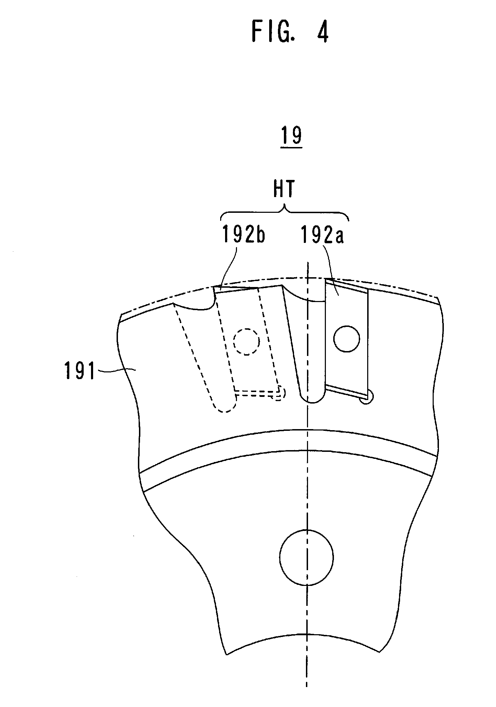

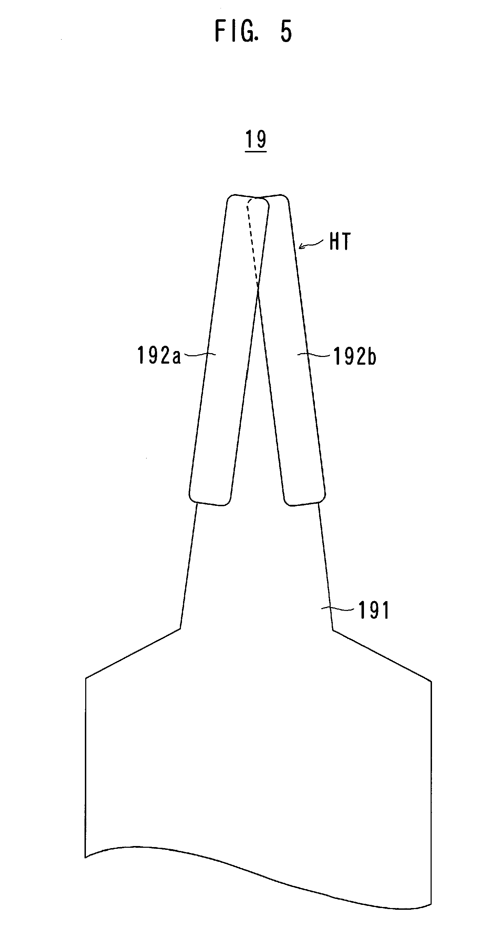

As shown in FIGS. 4 and 5, the side cutter (side milling cutter) 19 is a stagger milling cutter in which blades 192a and 192b are provided alternately with an equiangular interval between each other on respective faces of a disc-shaped cutter main body 191, near the outer circumferential edge thereof. Specifically, many blades 192a are attached to one side face of the cutter main body 191 at an equiangular interval, and a blade 192b is attached to the other side face at each intermediate position between one blade 192a and another blade 192a. A blade body HT is formed by two groups of blades 192a and 192b, and in the present embodiment, the shape of the blade body HT is substantially trapezoidal. Accordingly, when the side cutter 19 is rotated and cuts into the work WK, a trapezoidal groove that is substantially the same shape as the blade body HT is formed.

In the present embodiment, the diameter of an arc described at the tip of the blade body HT of the side cutter 19 is 350 mm.

With reference to FIGS. 1 to 3 and 8, the side cutter 19 is attached to the cutter shaft 18 by a bolt or the like. An axis JC of the cutter shaft 18 is tilted at a predetermined angle relative to a plumb line JE, that is to say, a line perpendicular to the θ shaft 13, and in the present embodiment, the predetermined angle is 45° (n/ 2). Accordingly, a tangent line JS in the running direction at a cutting position (contact position) of the blade body HT of the side cutter 19 is also tilted the same 45° relative to the axis JW of the work WK. This 45° tilt angle is the torsion angle β described above.

Rotating the cutter shaft 18 causes the side cutter 19 to rotate. Also, with use of the Z axis slide 16, the blade body HT of the side cutter 19 is adjusted so as to cut into the outer circumferential face of the work WK only to the depth of the groove MZ. In this state, with use of the X axis slide 15, the side cutter 19 is moved in a direction parallel to the axis JW of the work WK (the direction of an arrow M1), and in synchronization with such movement, the work WK is rotated in the arrow M2 direction around the axis thereof with use of the θ shaft 13. Note that the arrow M1 direction is the X axis direction.

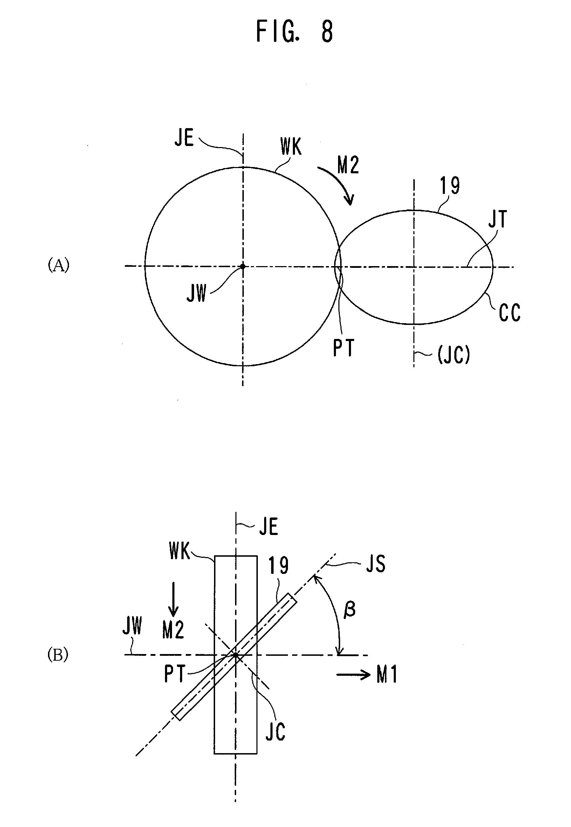

As clearly shown in FIGS. 8(A) and 8(B), the work WK and the side cutter 19 are in deepest contact at a contact position PT on a straight line JT that is orthogonal to the respective axes JW and JC. Accordingly, the work WK is most deeply cut at the contact position PT. At the contact position PT where the cutting is deepest, the cross-sectional shape of the groove MZ is the same shape as the blade body HT. Also, the blade body HT is shaped such that there is no interference between the circumferential faces of the formed groove MZ and the blade body HT at a position separated from the contact position PT in the direction of the tangent line JS. Furthermore, the shape of the blade body HT is an isosceles trapezoid whose short side is the tip part as described above, and with use of such blade body HT, the trapezoidal groove MZ that is the same shape as the blade body HT is formed in the outer circumferential face of the work WK.

Note that the cutting apparatus 1 is provided with a rotational driving apparatus 20 for rotationally driving the θ shaft 13, and linear driving apparatuses 21 and 22 for feeding the X axis slide 15 and the Z axis slide 16.

The drive source of the rotational driving apparatus 20 is an electrical motor such as an AC servo motor, a DC servo motor, a synchronous motor, or a pulse motor, or a hydraulic actuator such as a hydraulic servo motor or a hydraulic cylinder, and the rotational driving apparatus 20 rotationally drives the θ shaft 13 via a power conversion mechanism or power transmission mechanism such as a reduction gear, a rack, or a screw shaft. As necessary, the rotation angle and angular velocity of the θ shaft 13 are detected by a sensor such as a rotation encoder or rotation pulse sensor.

Also, the linear driving apparatuses 21 and 22 linearly drive the X axis slide 15 and the Z axis slide 16 by combining one of the various driving sources described above with a power transmission mechanism or a power conversion mechanism. As necessary, the feed amount and feed speed of the X axis slide 15 and the Z axis slide 16 are detected by a sensor such as a rotation encoder or linear pulse sensor.

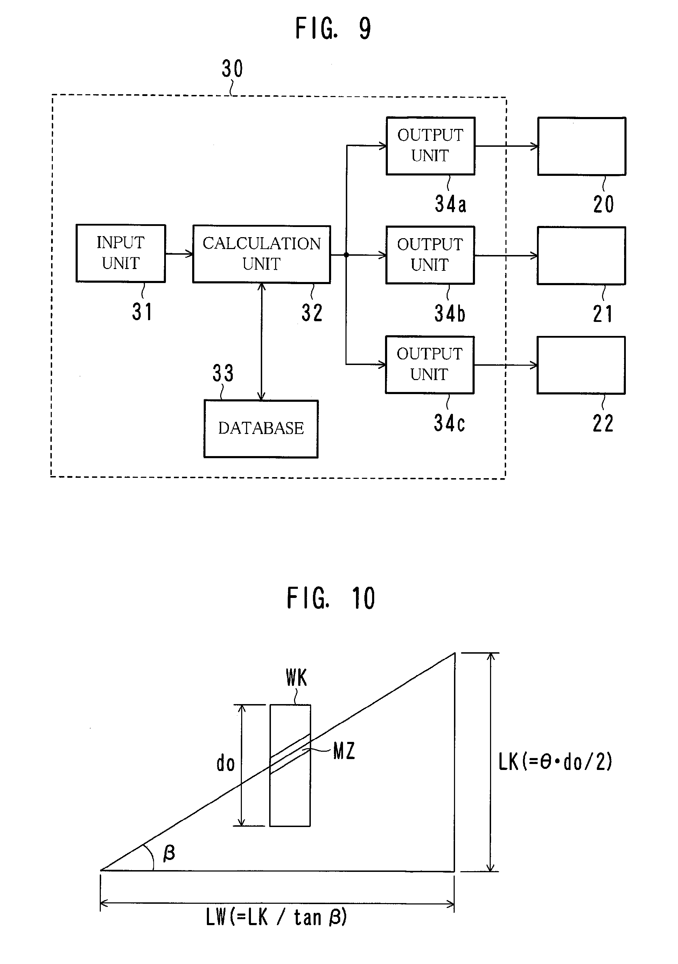

As shown in FIG. 9, the control apparatus 30 includes an input unit 31, a calculation unit 32, a database 33, and output units 34a to 34c. The input unit 31 receives input information regarding the dimensions, shape, material, surface roughness, and the like of the side cutter 19, the work WK, the rotor RT, and the like, as well as information regarding user operations and instructions, and stores such information, as well as sends such information to the calculation unit 32.

The database 33 has stored therein, in association with the information input from the input unit 31, data necessary for controlling the feed amount and feed speed of the X axis slide 15 and the Z axis slide 16, and various types of data for performing synchronization control, as well as various types of data necessary for controlling the cutting apparatus 1, programs, and the like.

The calculation unit 32 performs calculations necessary for controlling the driving of the rotational driving apparatus 20 and the linear driving apparatuses 21 and 22 based on the information input from the input unit 31 and the information stored in the database 33.

Accordingly, the control apparatus 30 controls the rotational driving apparatus 20 and the linear driving apparatuses 21 and 22, performs control so that the movement of the side cutter 19 in the arrow M1 direction and the rotation of the work WK in the arrow M2 direction are synchronized, as well as performs overall control of the cutting apparatus 1.

Note that the control apparatus 30 can be constituted by a CPU, a RAM, a ROM, other peripheral devices, an interface circuit, a magnetic disk, magnetic tape, a display apparatus, an input apparatus, and the like. Also, the use of an appropriate sequencer, or the combined use of these is also possible.

Next is a description of synchronization control.

In FIG. 10, letting the diameter of the work WK be d0, the length of an arc corresponding to the rotation angle θ [rad] of the θ shaft 13, that is to say, the traveling distance LK of the surface of the work WK, is expressed by the expression (1) below.

$$LK = \theta \cdot d0/2 \qquad ...(1)$$

Also, the traveling distance LW of the side cutter 19 that is based on the torsion angle β of the groove MZ and corresponds to the rotation angle θ [rad] of the θ shaft 13 is expressed by the expression (2) below.

$$LW = LK/\tan\beta \qquad ...(2)$$

Accordingly, by controlling the θ shaft 13 and the X axis slide 15 so that the traveling distance LK of the surface of the work WK and the traveling distance LW of the side cutter 19 maintain the expression (2), the groove MZ having the torsion angle β is formed.

In the present embodiment, $\tan\beta = 1$ since torsion angle β=45°, and therefore synchronization is achieved if control is performed so that LW=LK.

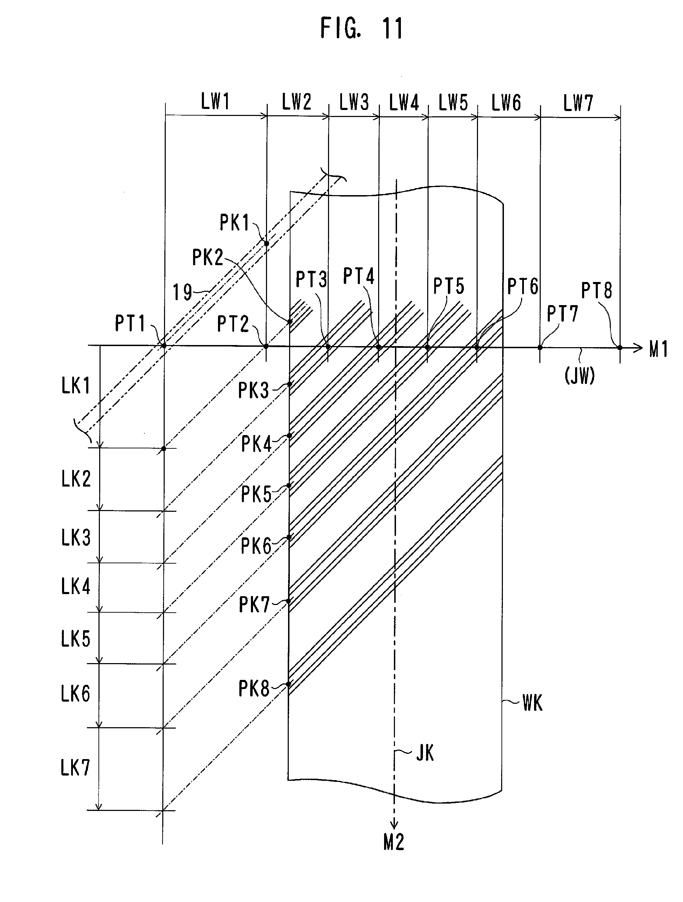

In FIG. 11, the surface of the work WK is shown expanded on a plane. FIG. 11 shows the trajectory of the contact position PT on the surface of the work WK. Note that although the contact position PT actually exists only on the surface of the work WK, FIG. 11 shows contact positions PT1, PT2, PT7, and PT8 that exist on a virtual extended plane of the surface of the work WK.

While rotating due to the cutter shaft 18, the side cutter 19 moves in the arrow M1 direction along the axis JW due to the X axis slide 15. In synchronization with this, the work WK rotates in the arrow M2 direction due to the rotation of the θ shaft 13, and the surface thereof moves along a virtual running line JK.

In correspondence with the movement of the side cutter 19 to the contact positions PT1, PT2, PT3, ..., PT7, and PT8 in the stated order, the surface of the work WK moves to surface positions PK1, PK2, PK3, ..., PK7, and PK8 along the virtual running line JK. Regarding the contact positions PT, traveling distances LW1, LW2, LW3, ..., LW6, and LW7 of the side cutter 19 are equal to corresponding traveling distances LK1, LK2, LK3, ..., LK6, and LK7 of the surface of the work WK. In other words, control is performed so that the traveling distance LW of the side cutter 19 is the same as the traveling distance LK of the surface of the work WK.

When the side cutter 19 is at the contact position PT1, the side cutter 19 is separated from the work WK, and the work WK is not cut. When the side cutter 19 is at the contact position PT2, part of the work WK is cut by the blade body HT at a position separated from the contact position PT2 of the side cutter 19.

When the side cutter 19 is at the contact position PT3, a groove MZ that is the same shape as the blade body HT of the side cutter 19 is formed at the contact position PT3, and part of a groove MZ is formed at a position ahead thereof (an upper-right position in FIG. 11). At a position behind the contact position PT3 (a lower-left position in FIG. 11), the blade body HT of the side cutter 19 does not interfere with the groove MZ. In other words, at a position behind the contact position PT3, cutting is essentially not performed by the blade body HT. Accordingly, the shape of the groove MZ formed up to when the side cutter 19 reaches the contact position PT3 is not changed by the blade body HT at a position behind the contact position PT3. Note that as long as the cutting of the groove MZ by the side cutter 19 is not hindered, the blade body HT may come into contact with the circumferential faces of the groove MZ.

When the side cutter 19 is at the contact positions PT4 to PT6, cutting is performed likewise to when the side cutter 19 is at the contact position PT3 described above.

When the side cutter 19 reaches the contact position PT7, the formation of the groove MZ has already been completed, and at this position, the blade body HT of the side cutter 19 does not interfere with the groove MZ. When the side cutter 19 reaches the contact position PT8, the side cutter 19 is separated from the work WK, and there is no interference between the side cutter 19 and the work WK.

In this way, the movement of the side cutter 19 and the rotation of the work WK are synchronized from directly before when the side cutter 19 starts cutting the surface of the work WK until when the cutting of the groove MZ has been completed and the side cutter 19 is sufficiently separated from the work WK.

The above description with reference to FIG. 11 is pertained to steps for performing synchronization control of the X axis slide 15 and the θ shaft 13 and forming the groove MZ. However, since in actuality the Z axis slide 16 is also controlled at the same time, it is sufficient for the range in which synchronization is necessary to be narrower. Note that the traveling direction of the Z axis slide 16 is the Z axis direction, which is the depth direction of the groove MZ.

In other words, for example, the side cutter 19 is moved by controlling the X axis slide 15 from the contact position PT2 to the contact position PT7, and synchronization control is performed for this duration. In this case, while the side cutter 19 is separated from the work WK in the Z axis direction, cutting to a predetermined depth at the contact position PT2 is performed by controlling the Z axis slide 16, and thereafter, the side cutter 19 is moved from the contact position PT2 to the contact position PT7 by controlling the X axis slide 15. At the contact position PT7, the side cutter 19 is separated from the work WK by controlling the Z axis slide 16.

Note that the positions and timing of the control of the X axis slide 15 and the Z axis slide 16 can be modified in various ways.

By repeating the above-described formation of the groove MZ at the groove MZ pitch, it is possible to form spiral grooves MZ around the entire circumference of the outer circumferential face of the work WK. In this case, it is sufficient to, for example, return the side cutter 19 to the origin position, and advance the rotation angle of the work WK by an angle corresponding to the groove MZ pitch. In this way, the fins FN are formed, and the rotor RT is manufactured.

Note that as is clear in the above description, by setting multiple works WK coaxially in the width direction thereof, grooves MZ can be formed in multiple works WK by moving the side cutter 19 one time.

Next is a description of the positional relationship between the blade body HT of the side cutter 19 and the groove MZ at the time of cutting.

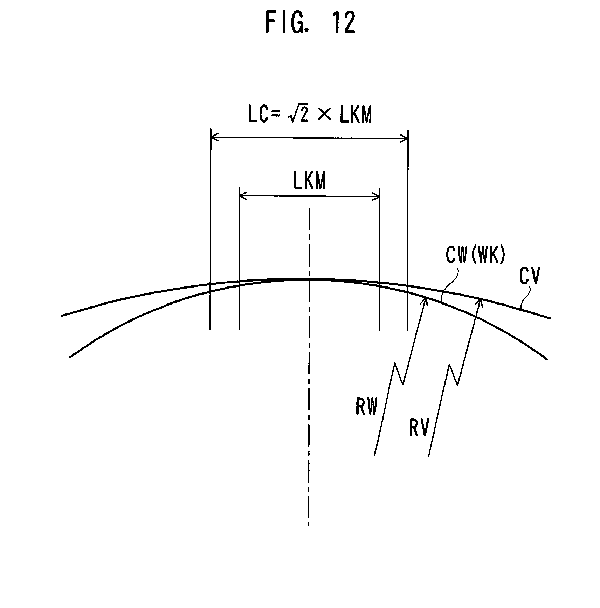

In FIG. 12, an arc CW indicating the outline of the work WK and a virtual circle CV that is an arc along the spiral groove MZ on the outer circumferential face of the work WK are depicted tangent to each other. In the present embodiment, the diameter of the arc CW is 455 mm, and the diameter of the virtual circle CV when the torsion angle β is 45° is approximately 907 mm. Note that the outer diameter of the work WK is 455 mm, and in the following calculations, calculation is performed on the basis of the external diameter.

Also, the traveling distance LKM of the surface of the work WK corresponding to one groove MZ is the same 77 mm as the width LWK of the work WK since the torsion angle β is 45°. The length LC of the groove MZ along the virtual circle CV is obtained as shown below, and is approximately 108.9 mm.

$$LC = LKM / \cos 45°$$
$$= 77 / 0.707$$

In other words, the maximum value of the length along the groove MZ at the contact positions PT between the blade body HT and the work WK is approximately 108.9 mm. That is to say, in the case of cutting one groove MZ, the side cutter 19 relatively moves approximately 108.9 mm along the virtual circle CV of the work WK while cutting.

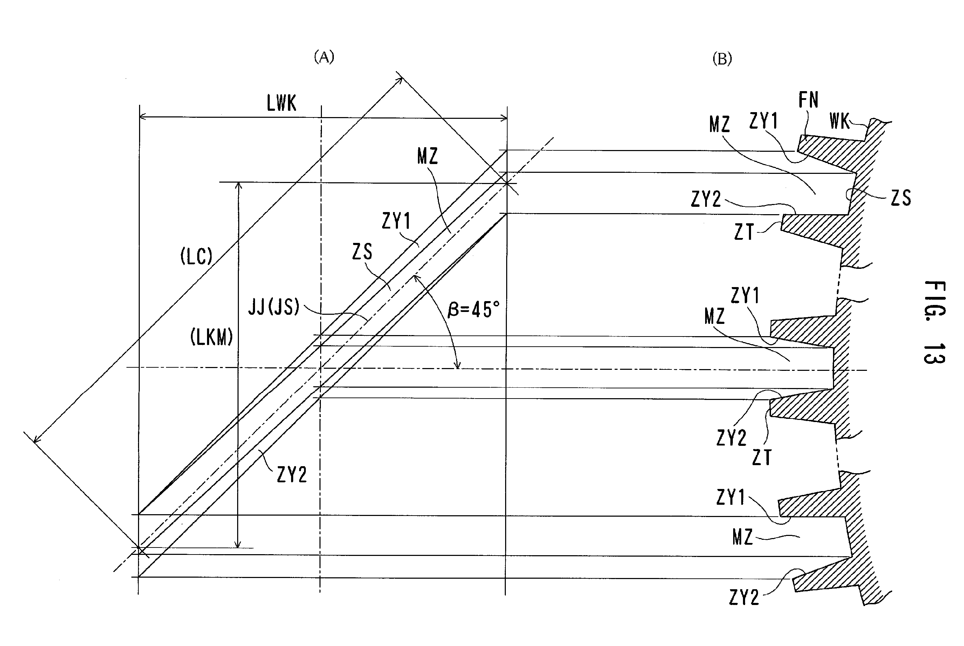

FIG. 13(A) shows a front view of the groove MZ, and FIG. 13(B) shows a cross-sectional view of the groove MZ at various positions. In FIG. 13(A), a reference line JJ is tilted at the torsion angle β relative to the X axis, and the blade body HT of the side cutter 19 moves along this reference line JJ. In FIG. 13(B), the central angle of the work WK between the top groove MZ and the central groove MZ is approximately 10.5°. In other words, in order to cut half of the groove MZ, it is necessary for the work WK to be rotated approximately 10.5° or more.

Note that the cross-sectional view of the groove MZ in FIG. 13(B) is a cross-section taken along a plane orthogonal to the axis JW of the work WK, and is not a cross-sectional view in a direction orthogonal to the groove MZ.

As shown in FIG. 13(A), the groove MZ appears in a twisted state in a front view thereof. Specifically, the direction of the center line of a bottom face ZS of the groove MZ and the direction of the center line of a top face ZT of a mountain (i.e., a fin FN) between adjacent grooves MZ are not parallel to each other, but rather are angled relative to each other. As a result, an upper wall face ZY1 of the groove MZ can be seen in a wide range in the upper right of FIG. 13(A), but becomes narrower when moving to the lower left. Conversely, a lower wall face ZY2 of the groove MZ is narrow in the upper right of FIG. 13(A), and becomes wider when moving to the lower left. Also, in the center part of FIG. 13(A), the upper wall face ZY1 and the lower wall face ZY2 appear to have the same width. This can be understood by contrasting with the cross-sectional view of the groove MZ shown in FIG. 13(B) .

Accordingly, in the case of assuming that the diameter of the side cutter 19 is very large, and the blade body HT runs substantially linearly due to the rotation of the side cutter 19, the blade body HT and the wall faces ZY1 and ZY2 interfere with each other at a position away from the center part in the length direction of the groove MZ. In this case, the wall faces ZY1 and ZY2 of the groove MZ are cut by the blade body HT, and therefore the cross-sectional shape of the groove MZ becomes different from the shape of the blade body HT, or cutting becomes impossible.

Conventionally, for this reason, it has been generally thought that a spiral groove cannot be cut by a side cutter, and spiral grooves have been formed with use of dedicated special tools such as a hob. In another example, spur gears and the like have conventionally been gear-cut with use of a side cutter, but it has been thought to be impossible to gear-cut a helical gear having spiral grooves.

However, the inventors of the present invention defied such conventional thinking, found that a spiral groove can be cut using a side cutter under certain conditions, and constructed the cutting apparatus 1 described in the present embodiment based on this finding.

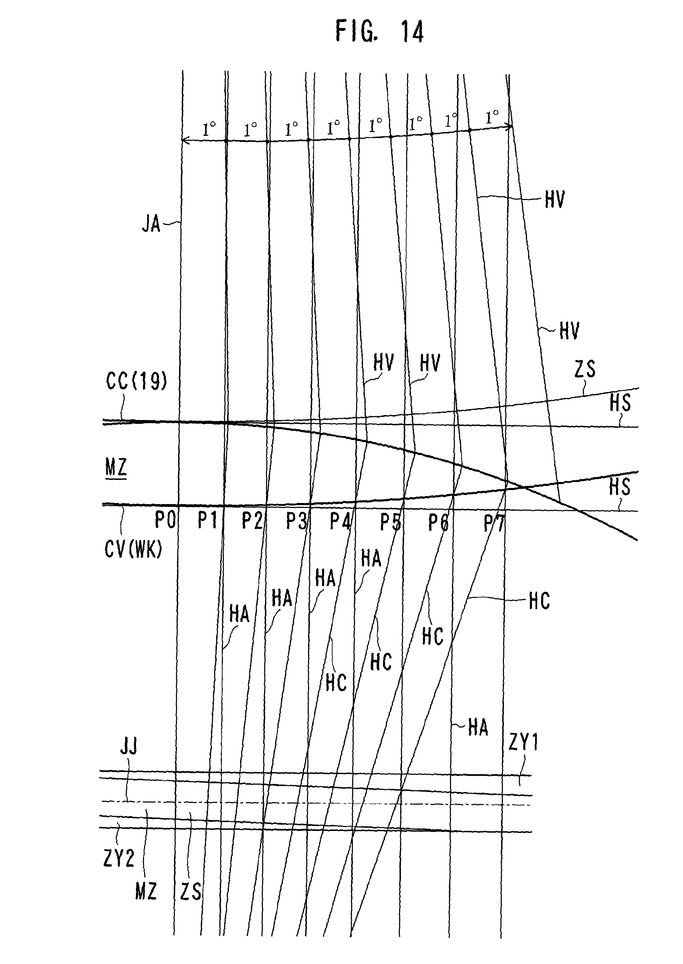

In FIG. 14, a contour line CC that is the trajectory of the tip of the blade body HT of the side cutter 19, and the virtual circle CV of the work WK are shown by bold solid lines. In the lower portion of FIG. 14, the front view of the groove MZ shown in FIG. 13 is shown rotated 45° to the right.

In other words, in the front view of the groove MZ shown in the lower portion of FIG. 14, the groove MZ cut by the side cutter 19 indicated by the contour line CC facing upward in FIG. 14 is shown as viewed from the side cutter 19 side. The reference line JJ in the groove MZ is the same as the reference line JJ shown in FIG. 13, and the blade body HT moves along this reference line JJ.

FIG. 14 shows a straight line JA connecting the center of the virtual circle CV and the center of the contour line CC, and P0 is the position where the straight line JA intersects the virtual circle CV. The position P0 is the central position in the length direction of the groove MZ, and is also the central position of the work WK in the width LWK direction.

Also, straight lines HS1 and HS2 are tangents drawn at points where the straight line JA intersects the virtual circle CV and the contour line CC respectively. These straight lines HS1 and HS2 are parallel to each other, and the interval therebetween is equal to the depth of the groove MZ.

Furthermore, radial lines HV for which the central angle of the virtual circle CV increases 1° at a time relative to the straight line JA are sequentially drawn. A radial line HC is drawn between the central point of the side cutter 19 and each point where the radial lines HV intersect the contour line CC of the side cutter 19. P1, P2, P3, ..., and P7 are points where the radial lines HC and the virtual circle CV intersect.

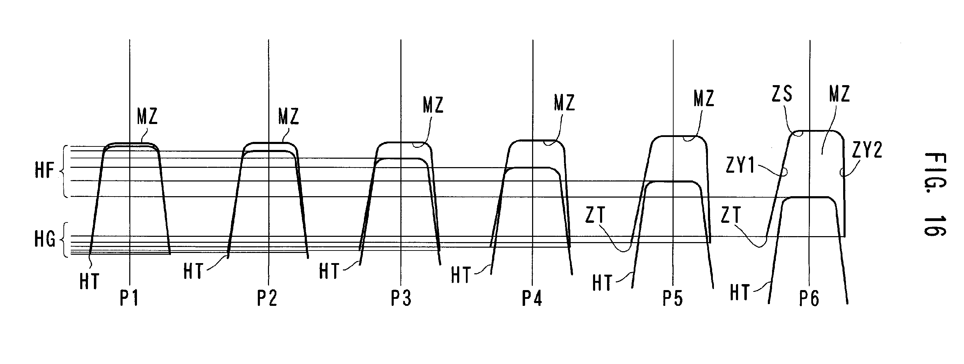

Also, straight lines HA that are parallel to the straight line JA are drawn from the intersection points P1 to P7. The shape of the groove MZ when a plane including the straight lines HA cross-sections the groove MZ therebelow is shown later in FIG. 16. In other words, as for the groove MZ cross-sectioned by the straight lines HA, FIG. 14 shows the shape of the groove MZ relative to the blade body HT at positions corresponding to the intersection points P1 to P7.

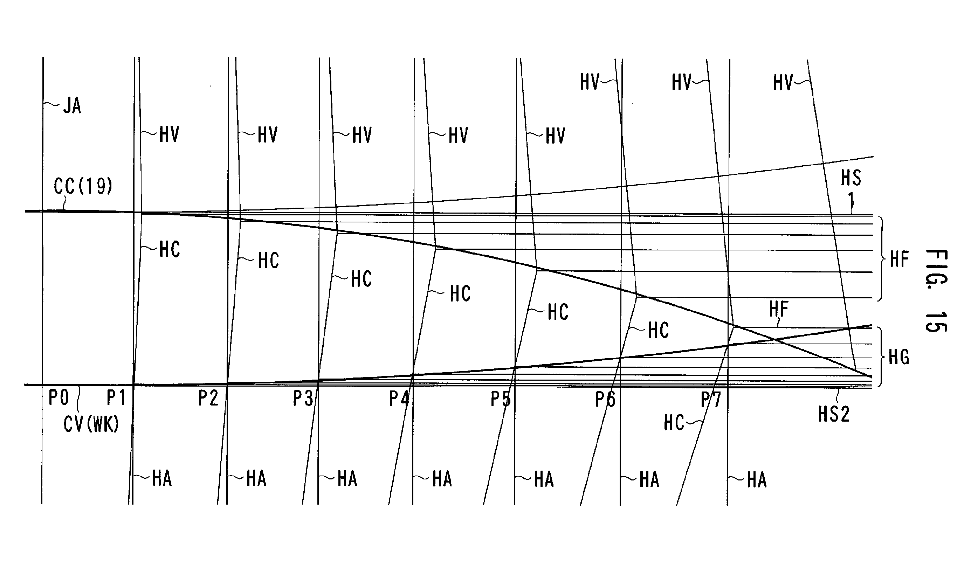

In FIG. 15, straight lines HF that are parallel to the straight line HS1 are drawn from points where the radial lines HV intersect the contour line CC. The straight lines HF show positions of the tip of the blade body HT in the depth direction at the intersection points P1 to P7.

Also, straight lines HG that are parallel to the straight line HS2 are drawn from points where the radial lines HC intersect the virtual circle CV. The straight lines HG show positions of the top face ZT of the mountain of the groove MZ in the height direction at the intersection points P1 to P7.

FIG. 16 shows positions of the groove MZ and positions of the blade body HT at the positions of the intersection points P1 to P6 based on the straight lines HF and the straight lines HG that were obtained in FIG. 15. Also, the shape of the groove MZ at the positions of the intersection points P1 to P6, that is to say, the positions in the width direction of the top face ZT, wall faces ZY1 and ZY2, and bottom face ZS of the groove MZ relative to the blade body HT (positions in the horizontal direction in FIG. 16), is shown by the groove MZ cross-sectioned by the straight lines HA shown in FIG. 14 described above.

Note that the positions and shapes of the blade body HT and the groove MZ at the position of the intersection point P0 is not shown, and this is because at the position of the intersection point P0, the position and shape of the blade body HT of course matches the position and shape of the groove MZ, and the groove MZ and the blade body HT would completely superimposed in FIG. 16.

It can be seen in FIG. 16 that the blade body HT separates from the groove MZ when moving from the intersection point P0 to the intersection points P1, P2, P3, and so on. At this time, the blade body HT is removed straight in the Z axis direction, and the groove MZ becomes twisted gradually although slightly and separates away from the blade body HT. However, in this process, the blade body HT separates away from the groove MZ without cutting into the wall faces ZY1 and ZY2 of the groove MZ, that is to say, without interfering with the already-formed groove MZ.

In this way, by setting the shape of the blade body HT to an isosceles trapezoid, it is possible to form a spiral groove MZ in the outer circumferential face of the cylindrical work WK by cutting with use of the side cutter 19. Since the cutting is performed with use of the side cutter 19, high-speed cutting is possible, thus enabling shortening the cutting time.

For example, when a cemented carbide tip is used as the blade body HT of the side cutter 19 whose diameter is 350 mm, and the side cutter 19 is rotated at approximately 150 RPM, the circumferential velocity of the blade body HT is approximately 160 meters per minute. Accordingly, it is possible to cut 80 grooves MZ in the work WK described above in approximately three hours.

Also, according to the cutting apparatus 1 of the present embodiment, cutting is performed with use of the side cutter 19, and therefore the blades are low-cost, and furthermore, their maintenance is easy.

Note that although the shape of the blade body HT is an isosceles trapezoid in the example described above, as there is an increase in the angle α of the oblique side relative to the center line of the blade body HT, that is to say, as the short side relative to the long side of the trapezoid is shorter, the blade body HT is more easily removed from the groove MZ, and to that extent, the diameter of the side cutter can be increased, thus enabling raising the cutting speed.

Also, as the diameter of the side cutter 19 decreases, and furthermore the diameter of the work WK decreases, the blade body HT is more easily removed from the groove MZ, thus enabling the use of a blade body HT whose trapezoidal shape is close to a rectangle, or whose shape is close to a rectangle.

Also, the torsion angle β can be various angles other than 45° as described above. As the torsion angle β decreases, interference between the blade body HT and the groove MZ less readily occurs, thereby increasing freedom in the design of the shape of the blade body HT.

Next is a description of examples of a blade body HT having another shape.

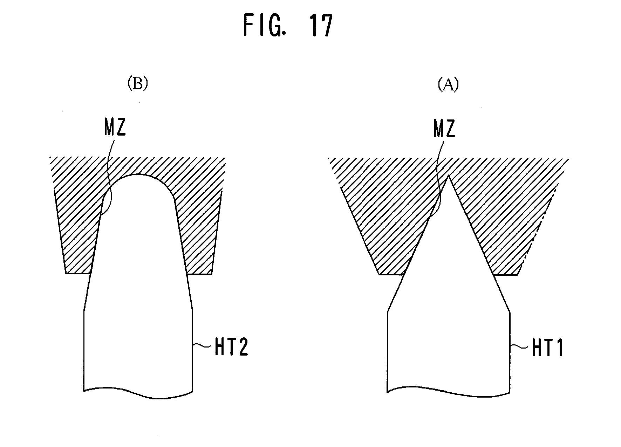

FIG. 17(A) shows a triangular blade body HT1. Accordingly, the shape of the groove MZ formed thereby is also a triangle. It is sufficient to provide the tip of the blade body HT1 with an appropriate roundness.

FIG. 17(B) shows a blade body HT2 whose tip is round. Accordingly, the shape of the groove MZ formed thereby is also round at the bottom part.

Furthermore, as the blade body HT, it is possible to use blade bodies HT having various dimensions and shapes other than the shapes described above, such as a non-isosceles trapezoidal shape, an arc shape, an elliptical shape, or a polygonal shape. In this case, regarding which shapes of blades HT can be applied to which kinds of works WK, it is sufficient to perform verification by creating drawings according to the method described in FIGS. 12 to 16. In this case, it is sufficient to prevent interference between the wall faces ZY of the formed groove MZ and the blade body HT. However, by willfully causing the blade body HT to come into contact with and cut the wall faces ZY of the formed groove MZ, it is possible to form a groove MZ having a special shape that differs from the blade body HT.

As described above, the conditions under which a spiral groove can be cut by a side cutter can be found by creating the drawings described in FIGS. 12 to 16. Accordingly, it is possible to find out whether a proposed groove MZ can be cut by creating drawings based on, for example, the dimensions of the work WK, the shape, dimensions, and torsion angle β of the groove MZ, and the diameter of the side cutter 19. Also, in this case, if cutting is not possible, it is possible to find out conditions under which cutting is possible by creating drawings, such as what diameter for the side cutter 19 enables cutting, or what corrections to the shape of the blade body HT enable cutting.

Also, although a theoretical expression and a conditional expression for enabling cutting has not been currently found, when they are found, it will be possible to easily find out whether a proposed groove MZ can be cut by performing calculations with a computer based on such expressions.

Also, by performing simulation with a computer based on various methods such as the method by creating drawings and the method of performing calculations with expressions, it is also possible to determine whether a proposed groove MZ can be cut.

For example, it is sufficient to input data indicating the shapes of parts corresponding to the configuration of the cutting apparatus 1 described above into a three-dimensional simulator, and verify whether there will be interference between the blade body HT and the work WK. Also, by checking the condition of cross sections at the above-described points P1, P2, P3, and the like with use of three-dimensional CAD, it is possible to verify whether there will be interference between the blade body HT and the work WK.

Although the example in which the groove MZ having a torsion angle β of 45° is formed in the cylindrical work WK by the cutting apparatus 1 is described in the embodiment described above, the torsion angle β may be an arbitrary angle other than 45°. The torsion angle β may be selected from the range of, for example, 10° to 45°, or 10° to 60°. Specifically, the torsion angle β can be 10°, 15°, 20°, 25°, 30°, 35°, 40°, 50°, 60°, or the like, or an arbitrary angle between these angles. Also, the work WK may be columnar or rod-shaped. Although the example of manufacturing the rotor RT by forming the grooves MZ in the work WK has been described, the present invention can be applied to manufacturing various parts and products other than the rotor RT.

For example, the tooth grooves of a helical gear may be formed by cutting with use of a side cutter. Also, the thread grooves of a screw may be formed by cutting with use of a side cutter.

Also, although the work WK is rotated around the θ shaft and the side cutter 19 is moved in the X axis direction and the Z axis direction in the cutting apparatus 1 of the embodiment described above, it is sufficient for such rotation and movement to be relative movement between the work WK and the side cutter 19. In other words, for example, a configuration is possible in which the work WK is rotated and moved in the X axis direction, and the side cutter 19 is moved in the Z axis direction. Also, a configuration is possible in which the work WK is rotated and moved in the Z axis direction, and the side cutter 19 is moved in the X axis direction. Also, a configuration is possible in which the work WK is rotated and moved in the Z axis direction and the X axis direction, and the side cutter 19 is not moved. Also, a configuration is possible in which the work WK is fixed, and the side cutter 19 is moved in the X axis direction and the Z axis direction, as well as is rotated around the θ shaft. Also, a configuration is possible in which the work WK and the side cutter 19 are both rotated around the θ shaft, moved in the X axis direction, or moved in the Z axis direction.

Also, a configuration is possible in which the work WK is gripped, rotated around the θ shaft, moved in the X axis direction or the Z axis direction, and the like by a robot, manipulator, or the like. Also, a configuration is possible in which the cutter shaft 18 of the side cutter 19 configured so as to rotate around the axis JC is gripped, rotated around the θ shaft, moved in the X axis direction or the Z axis direction, and the like by the robot, manipulator, or the like. Also, a configuration is possible in which two robots or manipulators are used to respectively grip the work WK and the side cutter 19, and relatively move them in respective directions or relatively rotate them.

Additionally, the structure, shape, dimensions, number, material, position, velocity, and the like of the side cutter 19, the blade body HT, the work WK, and the parts of or entirety of the cutting apparatus 1 can be changed appropriately in accordance with the spirit of the present invention.

**Claims**

1. A method of forming a spiral groove in an outer circumferential face of a columnar or cylindrical member to be cut by cutting, the method comprising:

rotating a side cutter provided with a blade body on an outer circumference around an axis thereof, in a state of the axis of the side cutter having been tilted at a predetermined angle relative to an axis of the member to be cut, and furthermore in a state of the blade body of the side cutter having been disposed so as to cut the outer circumferential face of the member to be cut by an amount of a depth of the groove; and
moving the side cutter parallel to the axis of the member to be cut, as well as in synchronization therewith, rotating the member to be cut around the axis thereof.

2. The method of forming the spiral groove by cutting according to claim 1,
wherein a shape of the blade body is identical to a cross-sectional shape of the groove at a contact position on a perpendicular line descending from the center of the side cutter to the axis of the member to be cut, and furthermore is a shape such that interference does not occur between a circumferential face of a formed groove and the blade body at a position separated from the contact position.

3. The method of forming the spiral groove by cutting according to claim 2,
wherein the shape of the blade body is a trapezoid whose short side is a tip part, and
a shape of the groove formed by the blade body is a trapezoid whose cross-sectional shape is identical to the shape of the blade body.

4. An apparatus that forms a spiral groove in an outer circumferential face of a columnar or cylindrical member to be cut by cutting, comprising:

a support apparatus that supports the member to be cut so as to be rotatable around an axis thereof;
a member-to-be-cut rotational driving apparatus that rotationally drives the member to be cut;
a side cutter provided with a blade body on an outer circumference thereof;
a side cutter support apparatus that supports the side cutter in a state in which an axis thereof is tilted to a predetermined angle relative to the axis of the member to be cut, and so as to be rotatable around the axis of the side cutter;
a side cutter rotational driving apparatus that rotationally drives the side cutter;
a cross feed apparatus for performing feeding so that the blade body of the side cutter reaches a position of cutting the outer circumferential face of the member to be cut by an amount of a depth of the groove;
a longitudinal feed apparatus for moving the side cutter parallel to the axis of the member to be cut; and

a control apparatus that performs control so that the movement of the side cutter by the longitudinal feed apparatus and the circumference direction movement of the outer circumferential face of the member to be cut by the member-to-be-cut rotational driving apparatus are synchronized.

5. The apparatus that forms the spiral groove by cutting according to claim 4,
wherein a shape of the blade body is identical to a cross-sectional shape of the groove at a contact position on a perpendicular line descending from the center of the side cutter to the axis of the member to be cut, and furthermore is a shape such that interference does not occur between a circumferential face of a formed groove and the blade body at a position separated from the contact position.

6. The apparatus that forms the spiral groove by cutting according to claim 5,
wherein the shape of the blade body is a trapezoid whose short side is a tip part.

7. The apparatus that forms the spiral groove by cutting according to claim 5 or 6,
wherein the side cutter is a stagger milling cutter whose blades are provided alternately.

8. The apparatus that forms the spiral groove by cutting according to any one of claims 4 to 7,
wherein the spiral groove is a groove for a cooling fin provided in an outer circumferential face of a rotor for an eddy current type retarder.

9. A method of forming a groove for a cooling fin provided in an outer circumferential face of a rotor for an eddy current type retarder by cutting with use of the method according to any one of claims 1 to 3.

10. A method of forming a tooth groove of a helical gear by cutting with use of the method according to any one of claims 1 to 3.

11. A method of forming a thread groove of a screw by cutting with use of the method according to any one of claims 1 to 3.

FIG. 1

# FIG. 2

# FIG. 3

FIG. 4

# FIG. 5

# FIG. 6

RT (WK)

FN

MZ

# FIG. 7

RT (WK)

$\beta = 45°$

FN

MZ

# FIG. 8

(A)

(B)

# FIG. 9

30

INPUT UNIT

31

CALCULATION UNIT

32

33

DATABASE

OUTPUT UNIT

34a

20

OUTPUT UNIT

34b

21

OUTPUT UNIT

34c

22

# FIG. 10

WK

do

MZ

$LK(=\theta \cdot do/2)$

$\beta$

$LW(=LK / \tan \beta)$

# FIG. 11

FIG. 12

$$LC = \sqrt{2} \times LKM$$

# FIG. 13

EP 2 172 294 A1

# FIG. 14

# FIG. 15

FIG. 16

# FIG. 17

(B)

MZ

~HT2

(A)

MZ

~HT1

**INTERNATIONAL SEARCH REPORT**

| | International application No. |
|---|---|
| | PCT/JP2007/000779 |

A. CLASSIFICATION OF SUBJECT MATTER
*B23C3/32*(2006.01)i, *B23C5/00*(2006.01)i, *B23G1/32*(2006.01)i

According to International Patent Classification (IPC) or to both national classification and IPC

B. FIELDS SEARCHED

Minimum documentation searched (classification system followed by classification symbols)
B23C3/32, B23C5/00, B23C5/08, B23F5/00, B23G1/32

Documentation searched other than minimum documentation to the extent that such documents are included in the fields searched
Jitsuyo Shinan Koho            1922-1996   Jitsuyo Shinan Toroku Koho   1996-2007
Kokai Jitsuyo Shinan Koho      1971-2007   Toroku Jitsuyo Shinan Koho   1994-2007

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 50-109593 A  (Mitsubishi Metal Corp.),<br>28 August, 1975 (28.08.75),<br>Page 2, upper left column, line 6 to lower<br>left column, line 8; Fig. 1<br>(Family: none) | 1-6,11<br>7-10 |
| X<br>Y | JP 46-014037 B1  (Gardner Denver Co.),<br>15 April, 1971 (15.04.71),<br>Full text; all drawings<br>& US 3180229 A            & GB 947680 A | 1,4,8<br>2,3,5-7,9-11 |

| ☒ | Further documents are listed in the continuation of Box C. | ☐ | See patent family annex. |
|---|---|---|---|

| * | Special categories of cited documents: |
|---|---|
| "A" | document defining the general state of the art which is not considered    to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>    04 October, 2007 (04.10.07) | Date of mailing of the international search report<br>    16 October, 2007 (16.10.07) |
|---|---|
| Name and mailing address of the ISA/<br>    Japanese Patent Office | Authorized officer |
| Facsimile No. | Telephone No. |

Form PCT/ISA/210 (second sheet) (April 2007)

**INTERNATIONAL SEARCH REPORT**

International application No.

PCT/JP2007/000779

C (Continuation). DOCUMENTS CONSIDERED TO BE RELEVANT

| Category* | Citation of document, with indication, where appropriate, of the relevant passages | Relevant to claim No. |
|---|---|---|
| X<br>Y | Microfilm of the specification and drawings annexed to the request of Japanese Utility Model Application No. 042649/1983(Laid-open No. 148209/1984)<br>(Kabushiki Kaisha Fuji Denki Sogo Kenkyusho),<br>03 October, 1984 (03.10.84),<br>Full text; all drawings<br>(Family: none) | 1,4,9<br>2,3,5-8,10,<br>11 |
| Y<br>A | JP 2001-038517 A (Toshiba Tungaloy Co., Ltd.),<br>13 February, 2001 (13.02.01),<br>Par. No. [0016]; Fig. 3 | 7-10<br>1-6,11 |
| Y<br>A | JP 06-277945 A (Liebherr-Verzahntechnik GmbH),<br>04 October, 1994 (04.10.94),<br>Par. Nos. [0021] to [0026]; Figs. 2, 7<br>& EP 0608479 A2          & DE 4301561 A | 3,6,10<br>1,2,4,5,7-9,<br>11 |

Form PCT/ISA/210 (continuation of second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H11113240 A